# EUROPEAN PATENT APPLICATION

(11) **EP 4 696 603 A1**
(43) Date of publication of application: **18.02.2026**
(21) Application number: 25193324.8
(22) Date of filing: 01.08.2025
(51) Int. Cl.: B64D 11/02, B64D 11/04

(54) **WATER SUPPLY AND DRAINAGE SYSTEM FOR AN AIRCRAFT AND CORRESPONDING AIRCRAFT**

(30) Priority: 13.08.2024 DE 102024123020
(71) Applicant: AIRBUS Operations GmbH, 21129 Hamburg (DE)
(72) Inventor: Schreiner, Axel, Hamburg (DE); Müller, Hannes, Hamburg (DE)
(74) Representative: Airbus Germany

(57) **Abstract**

The present disclosure relates to a water supply and drainage system (100) comprising: a supply tank (110) configured to store water; a Venturi manifold (130) having an inlet (131), an outlet (133) and a low-pressure coupling (132), wherein the Venturi manifold is configured to generate a low-pressure, if a fluid streams from the inlet to the outlet; a conveying device (115) fluidly coupled to the supply tank (110) and configured to convey water from the supply tank to the inlet of the pump; a water supply pipe (122) connected to the low-pressure coupling and configured to conduct water to at least one water consumer (200); a drainage pipe (123) connected to the outlet of the Venturi manifold; and a shutoff valve (140) in the drainage pipe.

## Description

The present disclosure generally relates to a water supply and drainage system and an aircraft having such water supply and drainage system. Particularly, the present disclosure relates to a water supply and drainage system comprising a Venturi manifold configured to supply water to water consumers and to drain a water supply pipe. Furthermore, the present disclosure relates to an aircraft comprising water consumers and such a water supply and drainage system.

In a conventional aircraft, water is stored in a centralised water tank and is distributed via a pipe network towards consumer equipment. The pipes of the network are usually made from stainless steel or titanium and the water is conveyed therethrough at a pressure level corresponding to a consumer pressure level, i.e. a pressure required at the water consumers. Furthermore, the pipes of the network are usually installed to allow drainage by gravity, in order to empty (drain) all pipes, for example, if the aircraft is not in use.

A further water distribution system is disclosed in EP 3 385 163 A1 and includes flexible hoses of smaller diameter than conventional steel or titanium pipes. The water is conveyed through such flexible hoses at a higher pressure to compensate for the smaller diameter. At the end of each hose can be a decentralised pressureless buffer tank for storing water to be supplied to associated water consumer equipment.

However, due to the smaller diameter pipes, draining such pipes by gravity becomes more difficult, as the water may stick to the walls of the pipes due to capillary force.

It is therefore an object of the present disclosure to provide an improved water supply system.

This object is solved by the present invention as defined in the independent claims. Preferred embodiments are defined by the dependent claims.

According to a first aspect to better understand the present disclosure, a water supply and drainage system for an aircraft comprises a supply tank configured to store water, and a Venturi manifold having an inlet, an outlet and a low-pressure coupling, wherein the Venturi manifold is configured to generate a low-pressure, if a fluid streams from the inlet to the outlet. The water supply and drainage system further comprises a conveying device fluidly coupled to the supply tank and configured to convey water from the supply tank to the inlet of the Venturi manifold, a water supply pipe connected to the low-pressure coupling and configured to conduct water to at least one water consumer, a drainage pipe connected to the outlet of the Venturi manifold, and a shutoff valve in the drainage pipe.

Thus, a water system for supplying water to water consumers in an aircraft as well as draining the pipes of such water system can be achieved by simple and cost-effective measures. Specifically, a Venturi manifold and a shutoff valve are of least complexity and are low-cost components.

For instance, typical solutions for draining water pipes include active drainage by suction and/or by blowing pressurised air through the pipes. For active drainage by suction, a special pump design is required enabling bidirectional pumping. Alternatively, employing a unidirectional pump requires a minimum of two 3-way valves together with related pipe work, in order to drain the water system. Pressurised air would require an air compressor and related pipe work to blow the air into the water pipes at the water consumers towards a drainage port. Such typical solutions are more costly, add weight to the aircraft and increase complexity of maintenance.

Therefore, the solution as provided in the present disclosure is less complex and much cheaper. At the same time, the water supply system, i.e., the actual piping architecture, can follow other needs than a gravity-based drainage, which also simplifies the piping architecture and, hence, the installation time and costs.

As a mere example, the water supply and drainage system disclosed herein can be employed with conventional stainless steel or titanium pipes of larger diameter as well as smaller diameter hoses. Such larger diameter pipes can have a diameter of approximately 10 to 15 mm (e.g., half inch diameter pipes), and the smaller diameter hoses may have an inner diameter of approximately 3 to 6 mm, such as 4 to 5 mm. In any case, the piping architecture can be freed from gravity-based drainage, so that the pipes can be installed on different routes, such as shortest route or routes having the least interference with other installed components in the aircraft.

In the present disclosure a Venturi manifold is to be understood as a manifold, pipe or coupling having a constriction, i.e. a section of decreasing and increasing inner diameter. The a low-pressure coupling is arranged at the narrow section (such as the constriction) of the Venturi manifold. The Venturi manifold can be implemented as a jet pump, an injector, Venturi nozzle or similar system that allows directing a flow of a "high-pressure" fluid in a manner that a "low-pressure" fluid is entrained in the fluid jet and carried through a duct and low-pressure coupling to a region of higher pressure. It is a known device based on Bernoulli's principle, and does not require any moving parts, which reduces maintenance efforts for the disclosed water supply and drainage system.

Any references to a "low-pressure" is to be understood as a static pressure being smaller than an ambient pressure. Particularly, the low-pressure achieved by the Venturi manifold creates a pressure difference between the low-pressure coupling of the Venturi manifold and the other end of the water supply pipe, which pressure difference is strong enough to suck water and air through the entire water supply pipe, hence achieving drainage.

In an implementation variant, the water and drainage system can further comprise a control unit configured to control the shutoff valve. Specifically, the control unit can be configured to close the shutoff valve, if a water supply to the water supply pipe is required. Thus, the water conveyed by the conveying device does not stream from the inlet to the outlet of the Venturi manifold and, hence, the Venturi manifold does not generate the low-pressure (pressure difference). Instead, the conveyed water entering the Venturi manifold at the inlet will leave the Venturi manifold at the low-pressure coupling connected to the water supply pipe. Thus, the Venturi manifold is not used as a pump, but water simply streams through (half of) the Venturi manifold.

On the other hand, the control unit can be further configured to open the shutoff valve, if the water supply pipe is to be drained. In other words, by opening the shutoff valve, a water (jet) stream can form between the inlet and outlet of the Venturi manifold, which will lead to the above-described Bernoulli's principle, i.e., a low-pressure will be generated at the low-pressure coupling. The flowing direction of the water in the water supply pipe, hence, turns around, and the water in the water supply pipe then flows towards the Venturi manifold and then, together with the water stream flowing through the Venturi manifold from its inlet to the outlet, to the drainage pipe.

As a mere example, the control unit can be further configured to open a valve associated with a water consumer fluidly connected to the water supply pipe, if the water supply pipe is to be drained. The water consumer valve can render open the water supply pipe with respect to the ambient environment. This allows forming a pressure gradient between the low-pressure coupling and the water consumer valve, i.e., between the two ends of the water supply pipe, facilitating draining the water supply pipe.

In a variant, the control unit can further be configured to operate the conveying device. As a mere example, the conveying device may be activated (by the control unit), if a water supply at the at least one water consumer is required, or if the shutoff valve is opened and the water supply pipe has to be drained. Otherwise, the control unit may switch off the conveying device, i.e., if now supply or drainage is required.

In a variant, the control unit can be configured to regularly close the shutoff valve, as the water supply mode will be the normal mode of the water supply and drainage system. For instance, during use of the aircraft and even during refilling of the supply tank, the shutoff valve can be closed.

Only if parts of the water system, particularly the water supply pipe, has to be drained, the shutoff valve will be opened and the conveying device will be operated, in order to generate the (jet) stream through the Venturi manifold to suck the water out of the water supply pipe.

In an implementation variant, the drainage pipe downstream of the shutoff valve can be a return pipe fluidly connecting the shutoff valve with the supply tank. This allows maintaining the water in the supply tank, but to drain the water supply pipe. This may be necessary, if the water supply pipe has to be empty, for instance, for maintenance reasons of a water consumer, for draining the water supply pipe, if it is at risk of freezing (e.g., when the cargo door is open and the outside temperature is below 0°C, and/or the water supply pipe is not heated) or if the entire system is drained via a drainage port installed at or connected to the supply tank. Furthermore, since the Venturi manifold requires a stream to generate the low-pressure for drainage of the water supply pipe, the water in the supply tank may be required until the water supply pipe is completely drained. Specifically, if more than one water supply pipe is connected to the Venturi manifold (i.e., its low-pressure coupling), and further if only a small amount of water is left in the supply tank, draining the water from the water supply pipe(s) into the supply tank may be beneficial for maintaining the return cycle of the water to operate the Venturi manifold as long as required.

On the other hand, the water drained from the water supply pipe(s) may be kept for a later operation time of the aircraft, which, for example, reduces the amount of water required to refill the supply tank.

It is to be understood that, the return cycle of the water (from the conveying device to the Venturi manifold, the drainage pipe and back to the conveying device) may bypass the supply tank. Thus, in a variant the drainage pipe downstream of the shutoff valve (or the return pipe) can be fluidly coupled to the conveying device or a pipe connecting the conveying device and the supply tank, thereby bypassing the supply tank.

In another implementation variant, the drainage pipe downstream of the shutoff valve can be a discharge pipe fluidly connecting the shutoff valve with a discharge port of the aircraft. Thus, water from the water supply pipe(s) as well as from the supply tank can be drained via the discharge port of the aircraft simply by operating the conveying device and opening the shutoff valve. In this regard, the conveying device and shutoff valve can also be used to drain the supply tank. This would allow an installation of the supply tank in a manner where it does not necessarily have to be drained by gravity only.

In an implementation variant, the Venturi manifold is directly connected to or integrated into the conveying device, and/or the Venturi manifold is directly connected to or integrated into the shutoff valve. Directly connected means that there is no connecting pipe between the Venturi manifold and the conveying device and/or the shutoff valve. Integrated means that the functionality of the Venturi manifold is achieved by a portion of the device or the shutoff valve.

According to a second aspect to better understand the present disclosure, an aircraft comprises at least one water consumer, and a water supply and drainage system of the first aspect or one or more of its variants. Furthermore, the water supply pipe of the water supply and drainage system is fluidly connected to the at least one water consumer.

Thus, by closing the shutoff valve, the at least one water consumer can be provided with water from the supply tank using the conveying device, and conducting the water via the Venturi manifold and, particularly, out of the low-pressure coupling.

In an implementation variant, the Venturi manifold of the water supply and drainage system can be located in the aircraft and relative to the lowest point of the water supply pipe, so that the entire water supply pipe can be drained from water using the low-pressure generated by the Venturi manifold. In other words, the low-pressure generated by the Venturi manifold depends on the design of the Venturi manifold and the (high) pressure achieved in the Venturi manifold by the conveying device. Thus, the minimum pressure achieved by the Venturi manifold at the low-pressure coupling sets a limit for drainage of water from the water supply pipe(s). Thus, a maximum hydraulic or geodetic head can be determined based on the minimum pressure achievable by the Venturi manifold (i.e., the lowest achievable low-pressure). Installing the water supply and drainage system relative to the lowest point of the water supply pipe, so that water can still be lifted from such lowest point, guarantees complete drainage of the water supply pipe(s).

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a water supply and drainage system;
- Figure 2: schematically illustrates a Venturi manifold of the water supply and drainage system of Figure 1; and
- Figure 3: schematically illustrates an aircraft comprising a water supply and drainage system.

In the following description, for purposes of explanation and not limitation, specific details are set forth in order to provide a thorough understanding of the present disclosure. It will be apparent to one skilled in the art that the present disclosure may be practiced in other implementations that depart from these specific details.

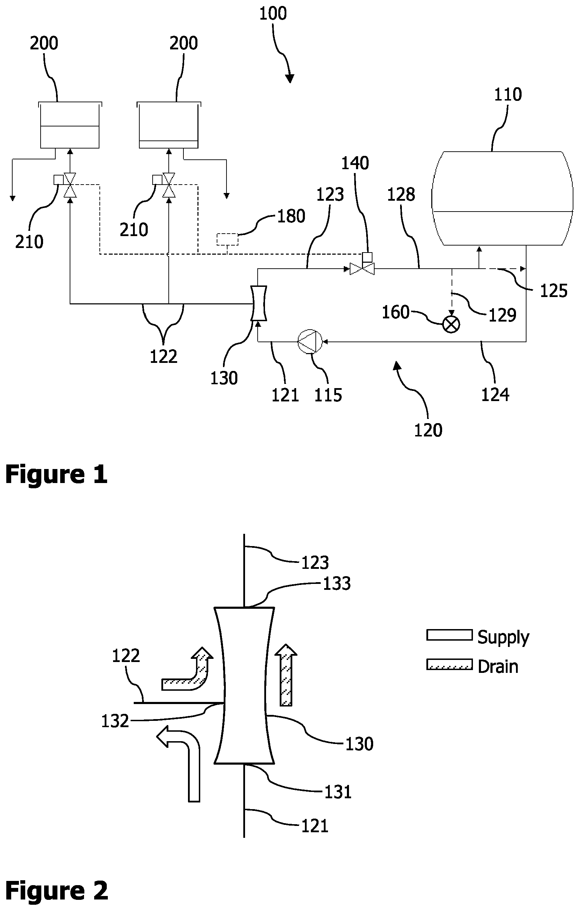

Figure 1 schematically illustrates a water supply and drainage system 100 that includes a supply tank 110 configured to store water. For instance, the supply tank 110 can store potable water to be used in at least one water consumer 200, such as a faucet, a water dispenser, coffeemaker, a hot water facility, a toilet, or the like. Figure 1 exemplarily illustrates buffer tanks 200 as "water consumers", which may be pressureless tanks configured to store a predetermined amount of water for one or more water consumers (not explicitly illustrated) downstream of the buffer tanks 200.

The water system 100 further comprises a Venturi manifold 130, that is illustrated in more detail in Figure 2. The Venturi manifold 130 has an inlet 131, an outlet 133 and a low-pressure coupling 132. The Venturi manifold 130 operates on Bernoulli's principle, i.e., if a fluid, e.g., water, flows from the inlet 131 to the outlet 133, a low pressure is generated therebetween, particularly at the constriction of the Venturi manifold, where the low-pressure coupling 132 is positioned. As a mere example, an inner diameter of the Venturi manifold 130 may decrease from the inlet towards the outlet, and may have a minimum in the region where the low-pressure coupling 132 is arranged. There is a fluid connection between the low-pressure coupling and the inner space of the Venturi manifold defined by the inner diameter. The inner diameter of the Venturi manifold 130 may then increase from that minimum towards the outlet. This change of inner diameter and, hence, change of cross-sectional area available for the fluid to flow through, generates the low-pressure in the region of the low-pressure coupling 132.

Referring back to Figure 1, the water system 100 further comprises a conveying device 115 fluidly coupled to the supply tank 110 and configured to convey water from the supply tank 110 to the inlet 131 of the Venturi manifold 130. Thus, when the conveying device 115 is energised/activated, a stream through the Venturi manifold 130 (from its inlet 131 to its outlet 133) can be generated.

Furthermore, the water system 100 further comprises a water supply pipe 122 connected to the low-pressure coupling 132, a drainage pipe 123 connected to the outlet 133, and a shutoff valve 140 in the drainage pipe 123.

Again with reference to Figure 2, by closing the shutoff valve 140, the stream in the Venturi manifold 130 is not formed, but the water conveyed by the conveying device 115 is forced to leave the Venturi manifold 130 at the low-pressure coupling 132. This is illustrated in Figure 2 by the non-hashed arrow. Thus, by operating the conveying device 115 and closing the shutoff valve 140, water can be supplied through the water supply pipe 122 to at least one water consumer 200.

As a mere example, the conveying device 115 can be operated to maintain a predetermined water pressure in the water supply pipe 122. Each water consumer 200 may have a water supply valve 210 connected to (a branch of) the water supply pipe 122. Thus, the respective water consumer 200 can be provided with a required amount of water from the supply tank 110 by simply opening the associated water supply valve 210.

On the other hand, if the shutoff valve 140 is in an open position, water can stream through the Venturi manifold 130 and leave at its outlet 133, thereby generating the low-pressure (i.e., low in relation to an ambient pressure, such as in the buffer tanks 200 or the air in the supply tank 110) at the low-pressure coupling 132. Thus, water streams from the inlet 131 as well as from the low-pressure coupling 132 towards the outlet 133, where it leaves the Venturi manifold 130 (this is illustrated in Figure 2 by the hashed arrows).

The water system 100 can further comprise a control unit 180 configured to control the shutoff valve 140. Since the control unit 180 is optional, the control unit 180 and any associated signal lines are only illustrated in dashed lines. As a mere example, the control unit 180 can also be connected to the water consumer 200, for example, the water supply valve 210 as illustrated. Thus, on the one hand, the control unit 180 can control the water supply valve 210, for example, only if the shutoff valve is closed, the control unit 180 will open one or more of the water supply valves 210. On the other hand, the control unit 180 can receive a signal from the water supply valves 210, if such valve 210 is opened. It is to be understood that the control unit 180 may further be configured to also control the conveying device 115 (although a corresponding signal line is not illustrated in Figure 1), particularly when it receives a signal from one more of the water supply valves 210 that they require a water supply.

In any case, the control unit 180 can be configured to close the shutoff valve 140, if a water supply to the water supply pipe 122 is required, and to open the shutoff valve 140, if the water supply pipe 122 is to be drained.

Furthermore, the water supply valve 210 may be configured to allow air to enter the water supply pipe 122 during drainage. This may also be controlled by the control unit 180. As mere examples, on the one hand, the water supply valve 210 may simply be opened, so that air can enter the water supply pipe 122. On the other hand, the water supply valve 210 or any other component at the water consumer 200 and/or at the water supply pipe 122 in the region of the water consumer 200 may include a vent port or vent valve to allow air to enter the water supply pipe 122.

During drainage of the water supply pipe 122, the water from the drainage pipe 123 may be fed to a return pipe 128 fluidly connecting the shutoff valve 140 with the supply tank 110. Thus, a circle of water can be achieved, which allows operating the Venturi manifold 130 in the drainage mode (hashed arrows in Figure 2) as long as there is water in the circle formed by the conveying device 115, the Venturi manifold 130, any of pipes 123, 128/125, 124 and 121, or at least until the entire water supply pipe(s) 122 is/are empty.

Another circle of water and can be achieved by providing a bypass pipe 125 that fluidly connects the shutoff valve 140 (or the drainage pipe 123) with a pipe 124 fluidly connecting the supply tank 110 with the conveying device 115. Since the bypass pipe 125 is optional, it is illustrated as a hashed arrow.

On the other hand, a discharge pipe 129 can be provided that fluidly connects the shutoff valve 140 with a discharge port 160. For instance, if enough water is still stored in the supply tank 110 that allows complete drainage of the water supply pipe(s) 122 via the Venturi manifold 130, the water from the supply tank 110 and the drained water can directly be discharged through discharge port 160. This further allows discharging/emptying the supply tank 110, if required.

It is to be understood that the water system 100 can include a return pipe 128 and a discharge pipe 129 and/or a bypass pipe 125 and means (not illustrated) to switch a water flow into the return pipe 128 and/or the discharge pipe 129 and/or the bypass pipe 125. This allows reusing/storing a first amount of water in the supply tank 110 as well as draining a second amount of water through the discharge port 160. As a mere example, draining the water supply pipe 122 may start with reusing the complete amount of water by guiding it through the return pipe 128 into the supply tank 110 or through the bypass pipe 125 into the conveying device 115. At a later point of time, at least a portion of the water flow from the Venturi manifold 130 may be guided into the discharge pipe 129, and even later the entire water flow may be guided into the discharge pipe 129.

A non-illustrated optional implementation of the Venturi manifold 130 can omit connecting pipe 121 between the conveying device 115 and the inlet 131 of the Venturi manifold 130. Since the effect of the Venturi manifold 130 is achieved simply by a constriction of the inner diameter, such Venturi manifold 130 can be formed directly at an outlet of the conveying device 115. Furthermore, the Venturi manifold 130 and its low-pressure coupling 132 can be integrated into the conveying device 115.

Alternatively or additionally, in another optional and non-illustrated implementation, the drainage pipe 123 can be omitted, so that the shutoff valve 140 is directly connected to the Venturi manifold 130. It is to be understood that the shutoff valve 140 can be integrated into the Venturi manifold 130, or vice versa, the Venturi manifold 132 and its low-pressure coupling 132 can be attached or integrated into the shutoff valve 140 (at its inlet side).

Further alternatively or additionally, the conveying device 115, the Venturi manifold 132 and the shutoff valve 140 can be directly installed one behind the other, i.e., the connecting pipe 121 and the drainage pipe 123 can be omitted. It is to be understood that the present disclosure also covers means (not illustrated) that integrate a conveying device 115, Venturi manifold 130 and shutoff valve 140 in a single device.

Furthermore, the conveying device 115 can be installed in or at the supply tank 110, so that the connecting pipe 124 can be omitted.

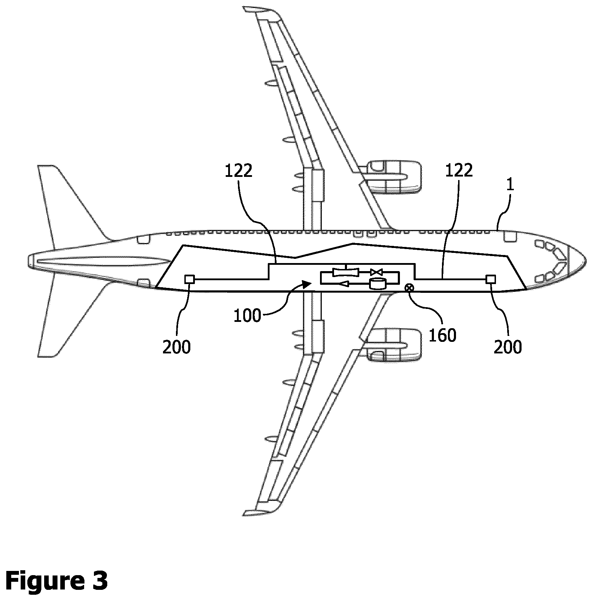

Figure 3 schematically illustrates an aircraft 1 comprising at least one water supply and drainage system 100, such as the water system 100 illustrated and explained with respect to Figures 1 and 2. The aircraft 1 can be equipped with a discharge port 160, that can be arranged at or near an outer skin of the aircraft 1. Thus, water from the water supply and drainage system 100 can be discharged through the discharge port 160, for example, via discharge pipe 129 (Figure 1).

It is to be understood that any number of water consumers 200 and any number of regions in the aircraft 1 having one or more water consumers 200 can be installed in the aircraft 1. Thus, the present disclosure is not restricted to the illustrated two water consumers 200. Likewise, the aircraft 1 may include one or more water supply and drainage systems 100 and/or one or more Venturi manifolds 130 and associated drainage valve(s) 140 in one or more water supply and drainage systems 100.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A water supply and drainage system (100) for an aircraft (1), comprising:
a supply tank (110) configured to store water;
a Venturi manifold (130) having an inlet (131), an outlet (133) and a low-pressure coupling (132), wherein the Venturi manifold (130) is configured to generate a low-pressure, if a fluid streams from the inlet (131) to the outlet (133);
a conveying device (115) fluidly coupled to the supply tank (110) and configured to convey water from the supply tank to the inlet (131) of the Venturi manifold (130);
a water supply pipe (122) connected to the low-pressure coupling (132) and configured to conduct water to at least one water consumer (200);
a drainage pipe (123) connected to the outlet (133) of the Venturi manifold; and
a shutoff valve (140) in the drainage pipe (123).

2. The water supply and drainage system (100) of claim 1, further comprising:
a control unit (180) configured to control the shutoff valve (140) by closing the shutoff valve, if a water supply to the water supply pipe (122) is required, and opening the shutoff valve, if the water supply pipe (122) is to be drained.

3. The water supply and drainage system (100) of claim 1 or 2, wherein the drainage pipe (123) downstream of the shutoff valve (140) comprises a return pipe (128) fluidly connecting the shutoff valve (140) with the supply tank (110).

4. The water supply and drainage system (100) of one of claims 1 to 3, wherein the drainage pipe (123) downstream of the shutoff valve (140) comprises a discharge pipe (129) fluidly connecting the shutoff valve (140) with a discharge port (160) of the aircraft (1).

5. The water supply and drainage system (100) of one of claims 1 to 4, wherein the Venturi manifold (130) is directly connected to or integrated into the conveying device (115), and/or
wherein the Venturi manifold (130) is directly connected to or integrated into the shutoff valve (140).

6. The water supply and drainage system (100) of one of claims 1 to 5, further comprising:
a bypass pipe (125) fluidly connecting the shutoff valve 140 with the conveying device (115).

7. An aircraft (1), comprising:
at least one water consumer (200); and
a water supply and drainage system (100) of one of claims 1 to 6, wherein the water supply pipe (122) of the water supply and drainage system is fluidly connected to the at least one water consumer.
